# EUROPEAN PATENT SPECIFICATION

(11) **EP 1 421 277 B1**
(45) Date of publication and mention of the grant of the patent: **17.01.2007**
(21) Application number: 02750838.1
(22) Date of filing: 13.07.2002
(51) Int. Cl.: F03B 3/04, F03B 13/08, F03B 17/06

(54) **HYDROELECTRIC PLANT**
HYDROELEKTRISCHE ANLAGE
USINE HYDROELECTRIQUE

(30) Priority: 16.07.2001 DK 200101115
(43) Date of publication of application: 26.05.2004
(73) Proprietor: Krogsgaard, Jørgen, 2770 Kastrup (DK)
(72) Inventor: Krogsgaard, Jørgen, 2770 Kastrup (DK)
(74) Representative: Holme, Edvard
(86) International application number: PCT/DK2002/000496
(87) International publication number: WO 2003/016710

(56) References cited:
- EP-A1- 0 499 806
- DE-U1- 29 608 187
- GB-A- 292 852
- JP-A- 2000 273 853
- US-A- 4 025 228

## Description

The invention relates to a hydroelectric plant for recovering energy from a falling water flow by means of a turbine comprising a mainly tubular turbine casing inserted in the water flow, a blade wheel mounted rotatably in this casing and having a turbine shaft extending in the longitudinal direction of the casing and upon which is mounted a number of projecting rotating blades dividing the casing into intake and outlet sections, respectively. Such a hydroelectric plant is eg known from EP-A-0 499 806.

Today, the energy in natural streams such as rivers, torrents and brooks is converted into especially electricity by means of hydroelectric plants that are installed in the streams. For this purpose, turbines are normally used for driving the generators that produce the electric current. The turbines are typically placed at the bottom of a falling stream where the energy content of the stream is the greatest.

Some streams form natural watertalls : Usually, the water in a stream is stemmed into an artificial lake or pond. Thereby, a regular water flow is obtained having a well-defined fall enabling a hydroelectric plant to run stably for a longer period even if the available flow of water varies during this in dependence of the weather and precipitation.

In smaller streams, the possibility of being able to accumulate large volumes of water for balancing an irregular flow of water is however often rather limited. Thereby, the considerable problem arises in that a turbine in such a stream will operate with highly varying water volumes.

In some cases, use is however made of simple turbines that cannot be regulated concurrently with the available flow of water. These turbines will therefore operate with an average low hydraulic efficiency.

A better average hydraulic efficiency can be obtained by letting the turbines operate at full power for appropriate periods, that is by repeatingly stopping and starting the turbines. However, this method has the disadvantage that it is harmful to the environment and gives a very variable production.

With a view to remedy the above disadvantages, actually adjustable turbines have been developed. However, these turbines regulate the water volume in the total flow area, the result of which is that they become complicated and expensive.

The object of the invention is to provide a hydroelectric plant of the kind mentioned in the opening paragraph, that has a simple design and that can be regulated easily and effectively in dependence of the available flow of water with an average high hydraulic efficiency.

According to the invention, this is obtained by placing a number of partitions in the intake section of the turbine casing for dividing the section in a number of intake sections; dividing the falling water flow in a number of subflows that are made to run into each their penstock; connecting the penstocks with each their intake section; and providing means for stopping the subflow in at least one penstock.

The turbine can preferably be arranged to operate optimally if it is supplied with the maximum flow of water of the respective stream or a predetermined fraction of this flow, for example ¾, via all penstocks during which the full flow area of the turbine is operative.

In case of a flow of water reduced in relation hereto, one or more penstocks can be closed for passage. The corresponding part of the blade wheel is thereby put out of active operation while the remaining part is supplied with just so much water that the turbine is able to maintain a high hydraulic efficiency.

Thereby, the significant advantage is obtained in that the turbine can be regulated easily and simply in dependence of varying flows of water without simultaneously reducing the average hydraulic efficiency of the turbine.

Furthermore, the regulation advantageously takes place by means of a robust, reliable structure that merely require the flow of water through one or more penstocks being stopped.

Normally, the intake of the penstocks is immersed in an overlying, stemmed pond. If the intake to one of the conduits is located higher up than the intake of one the other conduits, an especially simple regulation is obtained in that the former conduit quite simply will stop operating when the water level in the pond reaches below its intake whereas the second conduit continuously is able to supply its part of the blade wheel with water.

A penstock can have fall along the entire extent from intake to turbine but in an advantageous embodiment, the conduit can be led up over the surface of the pond along a section so that an upper part of the conduit will form a siphon.

If the water level now is lowered so much in the pond that the intake of the conduit will be in open air, the conduit is quickly emptied of water. By means of a vacuum pump connected to an upper area of the siphon, the conduit can however easily be filled with water when the water level rises so that the conduit again can participate in the operation of the turbine.

In a variant of this embodiment, said upper area of the siphon is at the same time connected to a water conduit having an intake located higher up than the intake of the penstock. A block valve can furthermore be inserted in the conduit.

When this valve is open, the penstock will be emptied of water and thereby put out of operation when the water level in the pond reaches below the intake of conduit. When the valve is closed, the penstock is only put out of operation when the water level reaches below the intake of the penstock itself. Thereby, a selective regulation is obtained by means of one and the same penstock.

A turbine with a good hydraulic efficiency is normally provided with stator blades located directly upstream of the rotating blades. According to the invention, each partition can then advantageously be located directly above such a stator blade which thus advantageously will contribute to defining an intake section extending in an area directly upstream of the rotating blades.

Thereby, it is prevented that the separate water flows through the intake sections will interfere with each other and thereby make it impossible to regulate the turbine with the wanted precision.

When one or more penstocks are closed or emptied of water and then put into operation again, the stator and rotating blades of the turbine can be subjected to fluid impacts which in such case could do damage on the turbine.

According to the invention, this problem is solved by mounting the stator and rotating blades of the turbine in the turbine casing in a way which is axially displaceable against the action of for example a spring so that the blades are enabled to yield to a fluid impact and thereby cushion the damage that the fluid impact could do on the turbine.

When the axial displacement of the stator and rotating blades is sufficient to take them out of the outlet section of the turbine casing, a free gap between the blades and the turbine casing for relieving the fluid impact is advantageously formed.

Waterweeds and waster matter which are taken in by the water flow are likely to accumulate especially in small turbines which thereby cannot or only can continue operating with highly reduced effect.

If the turbine is arranged with stator and rotating blades which, as mentioned, are displaced axially out of the turbine casing, the turbine will become self-cleaning, waterweeds and waste matter being flushed out through the gap formed by the blades in their extreme position.

This cleaning process takes place upon fluid impact or if the turbine has been blocked so much that said spring no longer can absorb the load from the overlying water column on the stator and rotating blades.

If the edges on the stator and/or rotating blades facing the direction of flow are extending in an obliquely inclined way in the direction of flow, waterweeds and waste matter taken in by the current will easily slip off the blades when pushed out of the casing.

To ensure against for example branches and rocks taken in by the water flow getting stuck between the stator and rotating blades, these latter blades can furthermore be mounted in an axially displaceable way in relation to the stator blades.

A turbine of the kind disclosed in the present application cannot operate if it is immersed more or less in water. The turbine casing is therefore provided with a suction pipe extending down into the lower run of the stream. Thereby, an air gap is made having a negative pressure that is maintained by means of a negative pressure valve.

According to the invention, the negative pressure is advantageously utilised for controlling the hydraulic power plant by means of one for each penstock associated air pipe connecting the suction pipe to an upper area of the penstock, a first block valve in each air pipe, a second block valve inserted in a branch designed on each air pipe between said upper area and the first block valve and communicating with open air, and a third block valve inserted in each penstock between said upper area and the turbine casing and preferably being a thin-walled hose.

The invention will be explained in detail below describing only exemplary embodiment with reference to the drawing, in which
Fig. 1 is a perspective view of a hydroelectric plant according to the invention,
Fig. 2 is a perspective side view on a larger scale of a turbine which is part of the hydroelectric plant in fig. 1 in operating position,
Fig. 3 shows the turbine in fig. 2 in relief position,
Fig. 4 is a fractional side view of a detail of the hydroelectric plant in fig. 1, and
Fig. 5 is a schematic view of a system for controlling the hydroelectric plant according to the invention.

In the following, it is assumed that the hydroelectric plant according to the invention is intended to utilise the hydropower in a small stream by means of a single turbine driving a generator for the production of electricity.

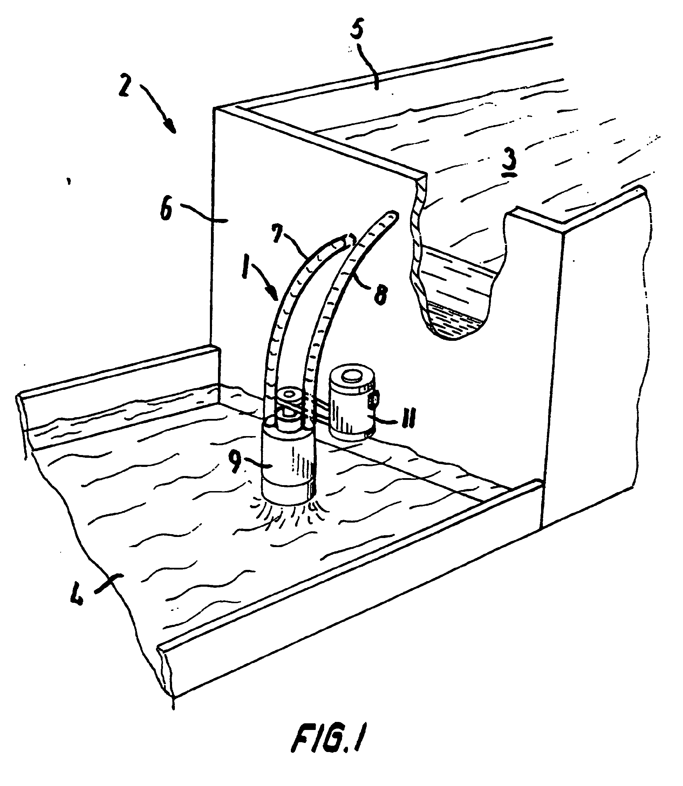

In fig. 1, a hydroelectric plant designated generally by the reference numeral 1 is placed in a stream shown fractionally and designated generally by the reference numeral 2.

The stream has an upper and lower run 3;4 located at a mutual vertical distance defining the fall available to the hydroelectric plant. The upper run is stemmed into a pond 5 by means of a dam 6.

From the dam 5, the water in the upper run 3 will under normal circumstances fall down into the lower run 4 in a falling water flow running, in the case shown, in a first - and second penstock 7;8, respectively, connected to the turbine 9 driving the electric generator 11 via a belt drive 10.

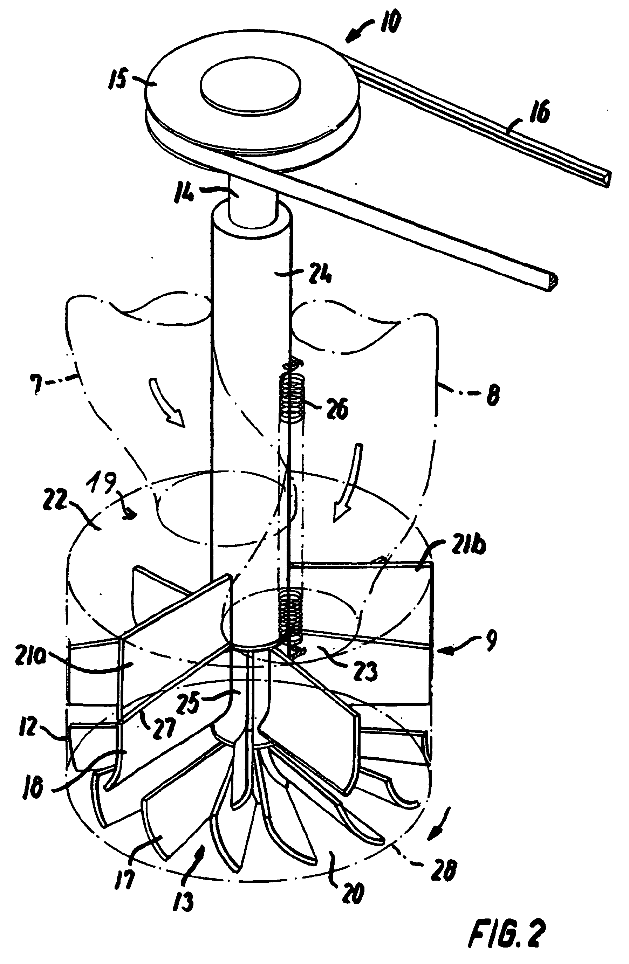

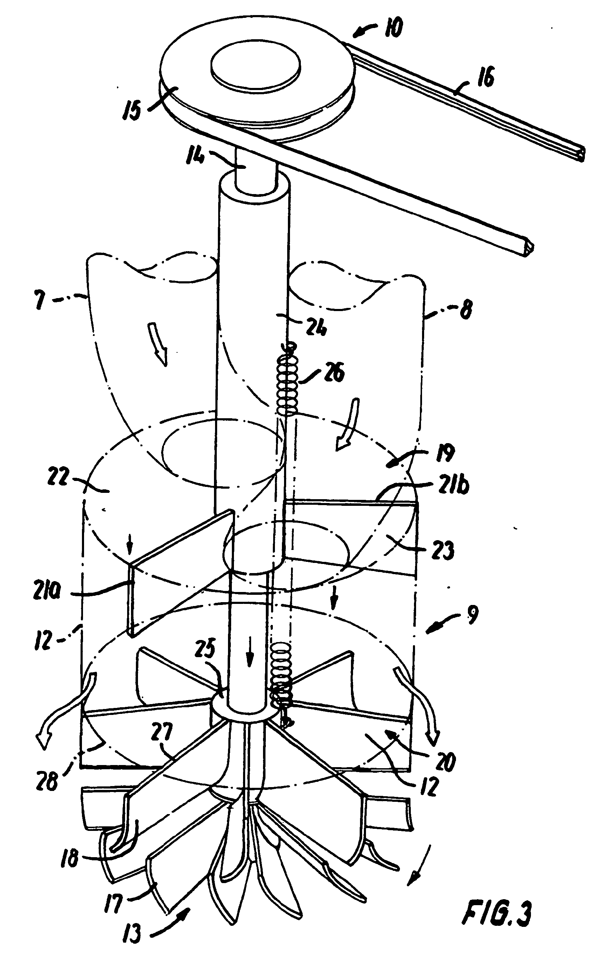

Figs. 2 and 3 show in detail that the turbine mainly consists of a mainly tubular turbine casing 12 shown in dash-dot line, in which a blade wheel 13 is mounted rotatably and having a turbine shaft 14 extending in the longitudinal direction of the casing.

In fig. 2, the blade wheel is in an operating position and in fig. 3, in a relief position. The meaning of these positions will subsequently be described in detail.

The belt drive 10 comprises a pulley 15 mounted on the turbine shaft 14 and a belt 16 for conveying the driving force to the electric generator which is not shown in figs. 2 and 3.

The belt drive 10 shown is only to be taken as an example, as the transmission between the turbine and the generator can be done in many expedient ways within the scope of the invention.

A number of projecting rotating blades are mounted the blade wheel 13. Upstream of these blades, a number of stator blades 18 are furthermore located for, during operation, guiding the water flow through the turbine casing in towards the rotating blades that thereby are made to rotate.

The turbine casing is divided into an intake and outlet section 19,20. The border between these two sections is formed by the blade wheel 13 in the operating position of this wheel in fig. 2.

Two partitions 21a,b divide the intake section 19 into first and second intake sections 22;23 connected to each their penstock 7;8 of which only a fraction is shown in dash-dot line.

As shown, the two partitions 21a,b are placed across each their stator blades 18. The two intake sections will thereby advantageously extend all the way to the rotating blades 17 which thereby are supplied with the water flow through the turbine casing in two, completely separate flows.

In the case shown, the first intake section 22 is extending over 240°, whereas the second intake section 23 is extending over 120°. In case of full flow of water, the water flow through the first intake section 22 will therefore be twice as large as the water flow through the second intake section 23.

The shaft 14 of the blade wheel 13 is journaled in a rotatable and axially displaceable way in a bearing 24 fixed in the turbine casing 12 in a way not described in detail.

The shaft 14 is furthermore extending rotatably but not in an axially displaceable way through a boss 25 nonrotatably mounted in the turbine casing and supporting the stator blades 18.

A tension spring 26 is serving for keeping the blade wheel 13 and the stator blades 18 in the normal operating position in fig. 2. In case of overload, the stator blades and blade wheel can be pushed down into the relief position in fig. 3 against the action of the spring 26, in this position the top edges 27 of the stator blades, which are inclining obliquely downwards, will be below the lower limitation of the turbine casing 12.

The hydraulic efficiency of a turbine will vary with the flow of water or in other words, with the specific rate of the water flow through the turbine. The turbine can expediently be designed in such a way that the optimum hydraulic efficiency is obtained by for example ¾ of maximum flow of water. The efficiency will only decrease a little at larger flows of water but a great deal at smaller flows of water.

The flow of water in especially small streams will however depend a great deal on especially varying precipitation. The flow of water to a turbine located in such a stream can therefore be so irregular that it will not pay to construct a hydroelectric plant on this spot:

The problem is solved in a simple and economic way by using a hydroelectric plant according to the invention.

In an interval around the normal flow of water which for example can be fixed to be ¾ of maximum flow, the water flow is led through both penstocks 7;8 to the blade wheel 13. The hydraulic efficiency is optimum or almost optimum.

If the flow of water falls to about 2/3 of normal flow, the second penstock 8 is closed whereby the water flow is cut off from the part of the blade wheel which is below the second intake section 23. As this intake section is extending over 120°, it covers a third of the total turbine flow area. 1/3 of the blade wheel will therefore no longer participate in the operation of the turbine.

The water flow reduced to 2/3 of normal flow is now only running in the first penstock 7 and via this first intake section 22 down to the underlying 2/3 of the blade wheel which thereby is flown through with the same specific rate as the entire blade wheel on normal flows of water. This means that the turbine will operate with the wanted optimal hydraulic efficiency also in case of a flow of water which is 2/3 of the normal flow.

If the flow of water falls to about 1/3 of normal flow, the first penstock 8 is closed instead, whereby the water flow is cut off from the part of the wheel blade which is under the first intake section 22.

The water flow reduced to 1/3 of normal flow is now only running in the second penstock 8 and via the second intake section 23 down to the underlying 1/3 of the blade wheel which thereby is flown through with the same specific rate as the entire blade wheel on normal flow of water. This means that the turbine also in case of 1/3 of the flow of water will operate with the wanted optimum hydraulic efficiency.

As can be seen, the turbine can thus easily be regulated to operate with wanted optimum hydraulic efficiency in three different levels of flow of water, namely in this case 1/3, 2/3 and nominal flow of water.

When a penstock is put into operation after having been closed, the flow through the conduit can assume the character of a fluid impact which under certain circumstances could damage the casing of the turbine, stator and rotating blades.

As mentioned earlier, the shaft 14 of the blade wheel 13 is therefore journaled in an axially displaceable way in the bearing 24 so that the boss 25 with the stator blades 18 and the blade wheel 13 with the rotating blades 17 can yield to such a fluid impact and thereby cushion its possible harmful effect on the turbine.

In the operating position in fig. 2, the stator and rotating blades 18;17 are kept in the operating position by means of the tension spring 26 which preferably would be dimensioned to be able to absorb the maximum occurring axial load on the blades 18;17. However, if the blades 18;17 are affected by fluid impacts that in volume exceed said maximum load, they are pushed down into the relief position in fig. 3 against the action of the tension spring 26, whereby a gap is formed between the lower delimitation 28 of the turbine casing and the blades 18;17, which gap is sufficiently large to be able to relieve the load of the fluid impact and thereby avoid a possible harmful effect on the turbine.

During this, waterweeds and/or waste matter taken in by the water flow and likely to block especially small turbines will at the same time be thrown and flushed out of the turbine casing. The turbine is thus self-cleaning.

The same process takes place if the turbine has been blocked so much that the overlying water column charges the stator and rotating blades 18;17 with a force application which is greater than the spring power of the tension spring 26.

As shown in figs. 2 and 3, the top edges 27 of the stator blades 18 are designed with an inclination extending obliquely downward to thereby more easily be able to get waterweeds and waste matter to slide off the blades.

The top edges of the rotating blades can be inclining in the same way to, in a corresponding manner, easily let go of possible waterweeds and waste matter.

The rotating blades can furthermore be mounted in an axially displaceable way in relation to the stator blades (not shown) to thereby prevent for example rocks and branches from getting stuck between the two sets of blades 18;17 and thereby put the turbine out of operation.

Within the scope of the invention, a penstock can be closed in many different expedient ways, for example by means of a valve inserted in the penstock.

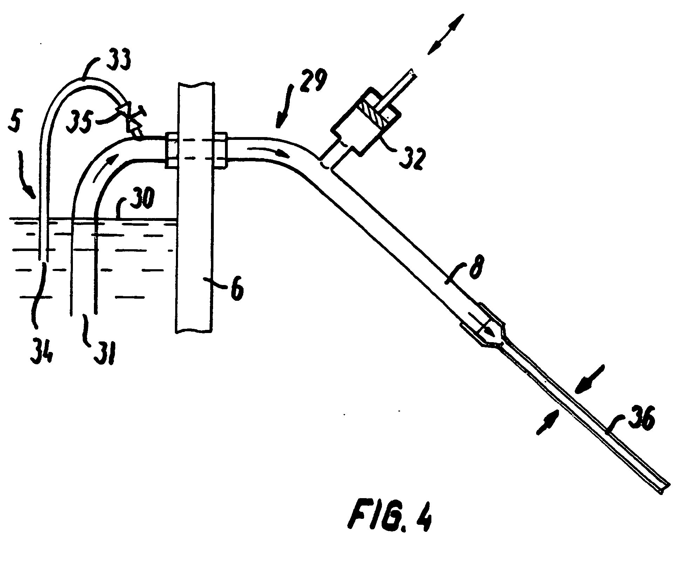

Fig. 4 illustrates other expedient ways of cutting off the water flow through the penstock, which for example can be the second penstock 8.

In this case, the upper part of the penstock is forming a siphon 29 guiding the water up over the water surface 30 of the pond 5 along a section. The intake 31 of the penstock is located a distance below this surface.

If the water level in the pond on reduced flow of water in the stream 2 falls so much that the intake of the penstock will be above the surface 30, the penstock will automatically be emptied of water.

This situation corresponds for example to the situation mentioned previously where the flow of water was about 2/3 of normal flow, and the reduced water flow therefore only ran in the first penstock 7 (not shown in fig. 4) which, in order to obtain this, had to have an intake underlying the second penstock 8.

The empty penstock 8 is put into operation again by drawing water up into the conduit by means of a vacuum pump 32.

In fig. 4, the siphon is furthermore connected to a water conduit 33 having an intake 34 located below the water surface 30 but higher up than the intake 31 of the penstock. In the conduit, a valve 35 is inserted for opening and closing the conduit.

When the valve is closed, the penstock is emptied when the water level in the dam falls so much that the intake of the penstock will be above the surface 30.

When the valve is open, the penstock is however emptied already when the intake 34 of the water conduit is above this surface.

By opening and closing, respectively, the valve 32, it is thus possible to differentiate the operation of the turbine in dependence of the water level in the dam simply by means of only one penstock.

Fig. 4 furthermore shows a simple valve for closing and opening the penstock 8. The valve is designed as a flexible hose 36 which can be compressed by means of the opposite force applications indicated by the arrows. In the figure, the hose is not compressed. The penstock is therefore open.

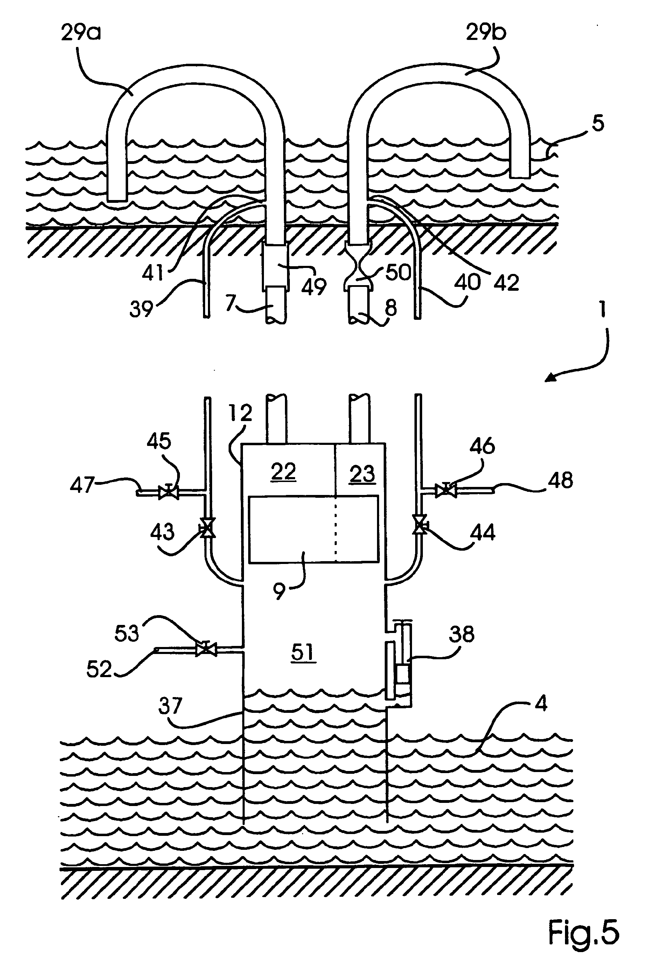

Fig. 5 is a schematic view of a system for controlling the hydroelectric plant in figs. 1 - 4. Like parts are indicated by the same reference numerals.

As shown, the turbine casing 12 is extending down into the lower run 4 of the stream with a suction pipe 37. The turbine 9 is only shown schematically here. A known negative pressure valve 38, which popularly is called a snifter valve, ensures a desired higher water level in the suction pipe 37 than in the lower run 4. If the water level falls, the valve is closed automatically, and if it rises, more air is let in.

Thereby, an air gap 51 is made which ensures that the turbine will not operate more or less immersed in water whereby it would not be able to function or would not be able function with even a fairly reasonable efficiency.

Said higher water level in the suction pipe causes a negative pressure to be generated in the gap 51.

An upper area 41;42 of each penstock, 7 and 8 respectively, is connected to the gap 51 in the suction pipe 37 via each their air pipe 39 and 40.

In each of these air pipes, a first block valve 43;44 is inserted. Between this valve and said upper area 41;42 of the penstocks 7;8, the air pipes are designed with a branch 47;48 communicating with open air. In each branch, a second block valve 45;46 is furthermore inserted.

In each penstock 7;8, a third block valve 49;50 is inserted between the turbine casing 12 and the siphons 29a and 29b, this third valve can be of any expedient kind per se. In the example shown, the third block valve however consists of a thin-walled hose.

When the turbine is inoperative, there is no water column in the suction pipe and therefore no negative pressure. At starting up, the necessary air gap in the suction pipe and negative pressure in this gap can however be generated by means of e.g. an injection pump (not shown) which evacuates the suction pipe via a conduit 52 having a fourth block valve 53. Upon normal operation, this valve is closed.

The system functions in the following way.

In fig. 5, the turbine is driven only by water from the penstock 7, the third valve 49 in this conduit being open. The first and second valve 43 and 45 are closed.

The second penstock 8 is closed by the third valve 50 in this conduit whereas the first and second valve 44 and 46 are closed.

By temporarily opening the second valve 45, false air gets into the penstock 7 whereby the siphon effect is broken and the penstock is emptied of water. Thereby, the negative pressure in the air gap 51 will be conveyed via the turbine to the thin-walled hose 49 which thereby will collapse and close the penstock. This situation is shown in fig. 5 as regards the second penstock 8.

If a penstock is closed in this way, the negative pressure in the air gap 51 of the suction pipe is maintained even if the water level in the dam 5 has fallen below the mouth of the siphon 29. If the mouth alternatively is below the water surface of the dam, it is ensured that the negative pressure will not be conveyed to the siphon which thereby unintentionally would resume its action.

If it is desired to put the penstock 8 into operation again, the first valve 44 is opened temporarily whereby the siphon 29b will begin to operate again so that water will flow to the collapsed hose 50 which is distended under the influence of the water pressure and thereby again will allow water to get through.

As it appears, the hydroelectric plant according to the invention can be controlled easily and reliably by means of the vacuum in the air gap which is a condition of the turbine being able to operate.

The hydroelectric plant is described above and shown in the drawing on the assumption that the hydroelectric plant in question was a small plant for utilising the energy in a small stream such as e.g. a torrent or a brook.

Within the scope of the invention; the hydroelectric plant can however be arranged as a larger or large hydroelectric plant for utilising the energy in a larger or large stream, such as e.g. a river, with the same advantages.

Instead of only one turbine, a hydroelectric plant according to the invention can furthermore be provided with two or several turbines.

Even if the above description of a hydroelectric plant is based on the fact that the hydropower is converted into electricity, the hydroelectric plant can be used just as well for converting the hydropower into mechanical energy in e.g. sawmills and mills within the scope of the invention.

## Claims

1. A hydroelectric plant for recovering energy from a falling water flow by means of a turbine (9) comprising
- a mainly tubular turbine casing (12) inserted in the water flow,
- a blade wheel (13) mounted rotatably in this casing,
- a turbine shaft (14) associated to the blade wheel (13) and extending in the longitudinal direction of the casing, and
- a number of rotating blades (17) mounted on the turbine shaft (14) and dividing the casing into intake and outlet sections (19;20) respectively,
**characterised in**
- **that** a number of partitions (21a,b) are placed in the intake section (19) of the turbine casing (12) and are dividing the section into a number of intake sections (22;23),
- **that** the falling water flow is divided into a number of subflows running in each their penstock (7;8),
- **that** the penstocks (7;8) are connected to each their intake section (22;23), and
- **that** there are means (29;33;35;36) for stopping the subflow in at least one penstock (7;8).

2. A hydroelectric plant according to claim 1, **characterised in that** the means for stopping the subflow in at least one penstock (7;8) comprise a block valve.

3. A hydroelectric plant according co claim 1 or claim 2, **characterised in that** the intake (31) to at least one penstock (7;8) is located higher up than the intake (31) of at least one second penstock (7;8).

4. A hydroelectric plant according to claim 1, 2 or 3, **characterised in that** an upper part of at least one penstock (7;8) is designed as a siphon (29).

5. A hydroelectric plant according to claim 4, **characterised in that** an upper part of the siphon (29) is connected to a vacuum pump (32).

6. A hydroelectric plant according to claim 4 or 5, **characterised in that** an upper area of the siphon (29) is connected to a water conduit (33), that the intake (34) of this conduit (33) is located higher up than the intake (31) of the penstock (8), and that a block valve (35) is inserted in the conduit (33).

7. A hydroelectric plant according to any of the claims 1 - 6, and wherein the turbine casing (12) of the turbine (9) is provided with a number of stator blades (18) located upstream of the rotating blades (17), **characterised in that** each partition (21a,b) is flush with a stator blade (18).

8. A hydroelectric plant according to claim 7, **characterised in that** the edges (27) of the stator blades and/or rotating blades (18;17) facing the direction of flow have an inclination extending obliquely outward and in the direction of flow.

9. A hydroelectric plant according to any of the claims 1 - 8, **characterised in that** the stator and rotating blades (18;17) of the turbine (9) are mounted in an axially displaceable way in the turbine casing (12), and that there are means, for example at least one spring (26), for affecting the blades (18;17) with a force acting in the opposite direction of the flow direction and having a predetermined value.

10. A hydroelectric plant according to claim 9, **characterised**
**in that** the axial displacement of the stator and rotating blades (18; 17) is at least so great that the rotating blades (17) or both the rotating blades (17) and stator blades (18) are displaced completely or partly out of the outlet section (20) of the turbine casing (12).

11. A hydroelectric plant according to claim 9 or 10, **characterised in that** the rotating blades (17) are mounted in an axially displaceable way in relation to the stator blades (18).

12. A system for controlling a hydroelectric plant comprising the hydroelectric plant of claims 1 - 11, and
- a suction pipe (37) extending down into the lower run (4) of the stream from the turbine casing (12), and
- a negative pressure valve (38) connected to the suction pipe and arranged to maintain the wanted negative pressure in this pipe,
**characterised in that** the system further more comprises
- an air pipe (39;40) associated to each penstock (7;8) and connecting the suction pipe to an upper area (41;42) of the penstock (7;8),
- a first block valve (43;44) in each air pipe,
- a second block valve (45;46) inserted in a branch (47;48) designed on each air pipe between said upper area (41; 42) and the first block valve (43; 44) and communicating with the open, and
- a third block valve (49;50) inserted in each penstock between said upper area (41;42) and the turbine casing (12).

13. A system according to claim 12, **characterised in that** the third block valve (49;50) is a thin-walled hose.

## Patentansprüche

1. Eine hydroelektrische Anlage zum Gewinnen von Energie aus einem fallenden Wasserfluss mittels einer Turbine (9), mit
- einem im wesentlichen rohrförmigen Turbinengehäuse (12), das in den Wasserfluss eingesetzt ist,
- einem Schaufelrad (13), das drehbar in diesem Gehäuse montiert ist,
- einer Turbinenwelle (14), die dem Schaufelrad (13) zugehörig ist und sich in Längsrichtung des Gehäuses erstreckt, und
- einer Anzahl von drehenden Schaufeln (17), die an die Turbinenwelle (14) angesetzt sind und das Gehäuse in einen Einlassabschnitt (19) bzw. einen Auslassabschnitt (20) teilt,
**dadurch gekennzeichnet, dass**
- eine Anzahl von Trennwänden (21a, b) in dem Einlassabschnitt (19) des Turbinengehäuses (12) angeordnet sind, die den Abschnitt in eine Anzahl von Einlassabschnitten (22, 23) aufteilen,
- der fallende Wasserfluss in eine Anzahl von Unterströmungen, die in ihren jeweiligen Druckleitungen (7; 8) fließen, aufgeteilt ist,
- die Druckleitungen (7; 8) mit ihren jeweiligen Einlassabschnitten (22; 23) verbunden sind, und
- Mittel (29; 33; 35; 36) zum Absperren des Unterstroms in wenigstens einer Druckleitung (7; 8) vorgesehen sind.

2. Eine hydroelektrische Anlage nach Anspruch 1, **dadurch gekennzeichnet, dass** die Mittel zum Absperren des Unterstroms in wenigstens einer Druckleitung (7; 8) ein Sperrventil aufweisen.

3. Eine hydroelektrische Anlage nach Anspruch 1 oder Anspruch 2, **dadurch gekennzeichnet, dass** der Einlass zu wenigstens einer Druckleitung (7; 8) höher als der Einlass (31) wenigstens einer zweiten Druckleitung (7; 8) angeordnet ist.

4. Eine hydroelektrische Anlage nach Anspruch 1, 2 oder 3, **dadurch gekennzeichnet, dass** der obere Teil wenigstens einer Druckleitung (7; 8) als ein Siphon (29) ausgebildet ist.

5. Eine hydroelektrische Anlage nach Anspruch 4, **dadurch gekennzeichnet, dass** ein oberer Teil des Syphons (29) mit einer Vakuumpumpe (32) verbunden ist.

6. Eine hydroelektrische Anlage nach Anspruch 4 oder 5, **dadurch gekennzeichnet, dass** ein oberer Bereich des Syphons (29) mit einer Wasserleitung (33) verbunden ist, dass der Einlass (34) dieser Leitung (33) höher als der Einlass (33) der Druckleitung (8) angeordnet ist und dass ein Sperrventil (35) in die Leitung (33) eingesetzt ist.

7. Eine hydroelektrische Anlage nach einem der Ansprüche 1 - 6, bei der das Turbinengehäuse (12) der Turbine (9) mit einer Anzahl von Statorschaufeln (18) versehen ist, die oberhalb der rotierenden Schaufeln (17) angeordnet ist, **dadurch gekennzeichnet, dass** jede Trennwand (21a, b) mit einer Statorschaufel (18) ausgerichtet ist.

8. Eine hydroelektrische Anlage nach Anspruch 7, **dadurch gekennzeichnet, dass** die Ränder (27) der Statorschaufeln und/oder der rotierenden Schaufeln (18; 17) die in die Richtung der Strömung weisen, eine Neigung haben, die schräg nach außen und in Richtung der Strömung verläuft.

9. Eine hydroelektrische Anlage nach einem der Ansprüche 1 - 8, **dadurch gekennzeichnet, dass** die Statorschaufeln und die drehenden Schaufeln (18; 17) der Turbine (9) in einer axial verlagerbaren Weise in dem Turbinengehäuse (12) montiert sind und dass Mittel vorhanden sind, beispielsweise wenigstens eine Feder (26), um die Schaufeln (18; 17) mit einer Kraft zu beaufschlagen, die entgegengesetzt zu der Strömungsrichtung wirkt und einen vorgegebenen Wert hat.

10. Eine hydroelektrische Anlage nach Anspruch 9, **dadurch gekennzeichnet, dass** die axiale Verlagerung der Statorschaufeln und der rotierenden Schaufeln (18; 17) wenigstens so groß ist, dass die rotierenden Schaufeln (17) oder sowohl die rotierenden Schaufeln (17) und die Statorschaufeln (18) vollständig oder teilweise aus dem Auslassabschnitt (20) des Turbinengehäuses (12) verlagert werden.

11. Eine hydroelektrische Anlage nach Anspruch 9 oder 10, **dadurch gekennzeichnet, dass** die rotierenden Schaufeln (17) in einer axial verlagerbaren Weise in Bezug auf die Statorschaufeln (18) montiert sind.

12. Ein System zum Steuern einer hydroelektrischen Anlage, die die hydroelektrische Anlage nach den Ansprüchen 1-11 aufweist, sowie
- ein Saugrohr (36), die sich abwärts in den unteren Lauf (4) des Stroms von dem Turbinengehäuse (12) erstreckt, und
- ein Unterdruckventil (38), das mit dem Saugrohr verbunden und angeordnet ist zum Beibehalten des erwünschten Unterdrucks in diesem Rohr,
**dadurch gekennzeichnet, dass** das System weiter aufweist
- ein Luftrohr (39; 40), das jeder Druckleitung (7; 8) zugehörig ist und die Saugpumpe mit einem oberen Bereich (41; 42) der Druckleitung (7; 8) verbindet,
- ein erstes Sperrventil (43; 44) in jedem Luftrohr,
- ein zweites Sperrventil (44;46), das in einen Zweig (47; 48) eingesetzt ist, der an jedem Luftrohr zwischen dem oberen Bereich und dem Sperrventil (43; 44) angeordnet ist und mit der Umgebung kommuniziert, und
- ein drittes Sperrventil (49; 50), das in jede Druckleitung zwischen dem oberen Bereich (41; 42) und dem Turbinengehäuse (12) eingesetzt ist.

13. Ein System nach Anspruch 12, **dadurch gekennzeichnet, dass** das dritte Sperrventil (49; 50) ein dünnwandiger Schlauch ist.

## Revendications

1. Matériel hydroélectrique pour récupérer l'énergie provenant d'un écoulement d'eau en chute au moyen d'une turbine (9) comprenant :
un carter de turbine (12) principalement tubulaire inséré dans l'écoulement d'eau,
une roue à aubes (13) montée de manière rotative dans ce carter,
un arbre de turbine (14) associé à la roue à aubes (13) et s'étendant dans la direction longitudinale du carter, et
un certain nombre d'aubes rotatives (17) montées sur l'arbre de turbine (14) et divisant le carter en sections d'entrée et de sortie (19 ; 20) respectivement ;
**caractérisé en ce :**
**qu'**un certain nombre de séparations (21a, 21b) sont placées dans la section d'entrée (19) du carter de turbine (12) et divisent la section en un certain nombre de sections d'entrée (22, 23),
**que** l'écoulement d'eau en chute est divisé en un certain nombre de sous-écoulements s'écoulant chacun dans leur conduite forcée (7 ; 8),
**que** les conduites forcées (7 ; 8) sont raccordées chacune à leur section d'entrée (22 ; 23), et
**qu'**il existe des moyens (29 ; 33 ; 35 ; 36) pour arrêter le sous-écoulement dans au moins une conduite forcée (7 ; 8).

2. Matériel hydroélectrique selon la revendication 1, **caractérisé en ce que** les moyens pour arrêter le sous-écoulement dans au moins une conduite forcée (7 ; 8) comprennent une soupape de blocage.

3. Matériel hydroélectrique selon la revendication 1 ou la revendication 2, **caractérisé en ce que** l'entrée (31) dans au moins une conduite forcée (7 ; 8) est positionnée plus haut que l'entrée (31) d'au moins une deuxième conduite forcée (7 ; 8).

4. Matériel hydroélectrique selon la revendication 1, 2 ou 3, **caractérisé en ce qu'**une partie supérieure d'au moins une conduite forcée (7 ; 8) est conçue comme un siphon.

5. Matériel hydroélectrique selon la revendication 4, **caractérisé en ce qu'**une partie supérieure du siphon (29) est raccordée à une pompe à vide (32).

6. Matériel hydroélectrique selon la revendication 4 ou 5 **caractérisé en ce qu'**une zone supérieure du siphon (29) est raccordée à une conduite d'eau (33), **en ce que** l'entrée (34) de cette conduite (33) est située plus haut que l'entrée (31) de la conduite forcée (8), et **en ce qu'**une soupape de blocage (35) est insérée dans la conduite (33).

7. Matériel hydroélectrique selon l'une quelconque des revendications 1 à 6 et dans lequel le carter de turbine (12) de la turbine (9) est prévu avec un certain nombre d'aubes de stator (18) situées en amont des aubes rotatives (17), **caractérisé en ce que** chaque séparation (21a, 21b) est de niveau avec une aube de stator (18).

8. Matériel hydroélectrique selon la revendication 7, **caractérisé en ce que** les bords (27) des aubes de stator et/ou des aubes rotatives (18 ; 17) orientées vers la direction de l'écoulement ont une inclinaison s'étendant d'une manière oblique vers l'extérieur et dans la direction de l'écoulement.

9. Matériel hydroélectrique selon l'une quelconque des revendications 1 à 8, **caractérisé en ce que** les aubes de stator et les aubes rotatives (18 ; 17) de la turbine (9) sont montées d'une manière axialement déplaçable dans le carter de turbine (12), et **en ce qu'**il existe des moyens par exemple au moins un ressort (26), pour affecter les aubes (18 ; 17) avec une force agissant dans la direction opposée à la direction d'écoulement et ayant une valeur prédéterminée.

10. Matériel hydroélectrique selon la revendication 9, **caractérisé en ce que** le déplacement axial des aubes de stator et des aubes rotatives (18 ; 17) est au moins si important que les aubes rotatives (17) ou à la fois les aubes rotatives (17) et les aubes de stator (18) sont déplacées complètement ou partiellement hors de la section de sortie (20) du carter de turbine (12).

11. Matériel hydroélectrique selon la revendication 9 ou 10, **caractérisé en ce que** les aubes rotatives (17) sont montées d'une manière axialement déplaçable par rapport aux aubes de stator (18).

12. Système de commande d'un matériel hydroélectrique, comprenant le matériel hydroélectrique selon les revendications 1 à 11, et comprenant :
un tuyau d'aspiration (37) s'étendant vers le bas dans le passage inférieur (4) du courant provenant du carter de turbine (12) et
une soupape de pression négative (38) raccordée au tuyau d'aspiration et agencée pour conserver la pression négative voulue dans ce tuyau,
**caractérisé en ce que** le système comprend en outre :
un tuyau d'air (39 ; 40) associé à chaque conduite forcée (7 ; 8) et raccordant le tuyau d'aspiration à une zone supérieure (41 ; 42) de la conduite forcée (7 ; 8),
une première soupape de blocage (43 ; 44) dans chaque tuyau d'air,
une seconde soupape de blocage (45 ; 46) insérée dans une ramification (47 ; 48) conçue sur chaque tuyau d'air entre ladite zone supérieure (41 ; 42) et la première soupape de blocage (43 ; 44) et communiquant avec l'ouverture, et
une troisième soupape de blocage (49 ; 50) insérée dans chaque conduite forcée entre ladite zone supérieure (41 ; 42) et le carter de turbine (12).

13. Système selon la revendication 12, **caractérisé en ce que** la troisième soupape de blocage (49 ; 50) est un flexible à fines parois.
